# EUROPEAN PATENT SPECIFICATION

(11) **EP 3 965 506 B1**
(45) Date of publication and mention of the grant of the patent: **09.10.2024**
(21) Application number: 19927268.3
(22) Date of filing: 02.05.2019
(51) Int. Cl.: H04W 72/232, H04W 72/0446

(54) **USER TERMINAL AND WIRELESS COMMUNICATION METHOD**
BENUTZERENDGERÄT UND DRAHTLOSKOMMUNIKATIONSVERFAHREN
TERMINAL UTILISATEUR, ET PROCÉDÉ DE COMMUNICATION SANS FIL

(43) Date of publication of application: 09.03.2022
(73) Proprietor: NTT DOCOMO, INC., Chiyoda-Ku Tokyo 100-6150 (JP)
(72) Inventor: MURAYAMA, Daisuke, Tokyo 100-6150 (JP); HARADA, Hiroki, Tokyo 100-6150 (JP)
(74) Representative: Hoffmann Eitle
(86) International application number: PCT/JP2019/018183
(87) International publication number: WO 2020/222272

(56) References cited:
- JP-A- 2019 050 570
- INTEL CORPORATION: "DL Signals and Channels for NR-unlicensed", vol. RAN WG1, no. Xi'an, China; 20190408 - 20190412, 30 March 2019 (2019-03-30), XP051691408, Retrieved from the Internet <URL:http://www.3gpp.org/ftp/tsg%5Fran/WG1%5FRL1/TSGR1%5F96b/Docs/R1%2D1904283%2Ezip> [retrieved on 20190330]
- GOOGLE: "Discussion on DL signals and channels in NR unlicensed", vol. RAN WG1, no. Xi'an, China; 20190408 - 20190412, 7 April 2019 (2019-04-07), XP051700177, Retrieved from the Internet <URL:http://www.3gpp.org/ftp/Meetings%5F3GPP%5FSYNC/RAN1/Docs/R1%2D1905086%2Ezip> [retrieved on 20190407]
- "DL Signals and Channels for NR-unlicensed", 3GPP TSG RAN WG1 #96BIS R1-1904283, 12 April 2019 (2019-04-12), pages 1 - 5, XP051691408
- "Discussion on DL signals and channels in NR unlicensed", 3GPP TSG RAN WG1 96BIS R1- 1905086, 12 April 2019 (2019-04-12), pages 1 - 5, XP009108222
- MOTOROLA MOBILITY ET AL.: "Feature lead summary for NR-U DL Signals and Channels", 3GPP TSG RAN WG1 #96BIS R1-1905710, 12 April 2019 (2019-04-12), pages 1 - 24, XP051707768
- "DL signals and channels for NR-U", 3GPP TSG RAN WG1 #97 R1-1906195, 17 May 2019 (2019-05-17), pages 1 - 5, XP051727649

## Description

### Technical Field

The present invention relates to a user terminal and a radio communication method in next-generation mobile communication systems.

### Background Art

In Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., referred to as "5th generation mobile communication system (5G))," "5G+ (plus)," "New Radio (NR)," "3GPP Rel. 15 (or later versions)," and so on) are also under study. Channel occupancy time (COT) indication and physical downlink control channel (PDCCH) monitoring as well as providing indication of time domain COT structure using downlink channel information (DCI) format 2_0 are known (see Non-Patent Literature 2 and 3).

### Citation List

### Non-Patent Literature

Non-Patent Literature 1: 3GPP TS 36.300 "Evolved Universal Terrestrial Radio Access (E-UTRA) and Evolved Universal Terrestrial Radio Access Network (E-UTR_AN); Overall description; Stage 2"
Non-Patent Literature 2: INTEL CORPORATION: "DL Signals and Channels for NR-unlicensed", 3GPP DRAFT; R1 -1904283 - INTEL - DL CHANNEL, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. Xi'an, China; 20190408 - 20190412 30 March 2019
Non-Patent Literature 3: GOOGLE: "Discussion on DL signals and channels in NR unlicensed", 3GPP DRAFT; R1 - 1905086, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. Xi'an, China; 20190408 - 20190412 7 April 2019

### Summary of Invention

### Technical Problem

For future radio communication systems (hereinafter simply referred to as NR), it is studied that, in a case of detecting no transmission from any other node in listening (idle, LBT-idle), a transmitting node (for example, a base station or a user terminal (UE) acquires a transmission opportunity ((TxOP), channel occupancy) and initiates transmission of a signal. The time of the transmission opportunity is referred to as a channel occupancy time (COT) and so on.

For example, it is studied that, in a case that a base station acquires a COT, the base station reports the start of the COT to a UE. As a signal reporting the start of a COT (start reporting signal), utilization of DCI including the above-described SFI index (for example, DCI format 2_0) is under study. However, how to report the end of a COT is a problem.

The present invention has been made in view of the above, and an object of the present invention is to provide a user terminal and a radio communication method that can appropriately determine the end of a COT.

### Solution to Problem

The subject-matter according to the independent claims solves the above technical problem. The dependent claims describe further preferred embodiments, and the following description exemplifies best modes for carrying out the present invention.

### Advantageous Effects of Invention

According to the present invention, a user terminal can appropriately determine the end of a COT and can flexibly change a slot format(s) according to a sudden change in environment in an unlicensed CC.

### Brief Description of Drawings

FIG. 1 is a diagram to show an example of slot formats;
FIGS. 2A and 2B are each a diagram to show an example of determination of slot formats;
FIG. 3 is a diagram to show an example of determination of slot formats according to a first aspect;
FIG. 4 is a diagram to show an example of a first COT end report according to a second aspect;
FIG. 5 is a diagram to show an example of the first COT end report according to the second aspect;
FIG. 6 is a diagram to show an example of a schematic structure of a radio communication system according to one embodiment;
FIG. 7 is a diagram to show an example of a structure of a base station according to one embodiment;
FIG. 8 is a diagram to show an example of a structure of a user terminal according to one embodiment; and
FIG. 9 is a diagram to show an example of a hardware structure of the radio base station and the user terminal according to one embodiment.

### Description of Embodiments

### (NR-U)

For future radio communication systems (for example, NR), studies have been conducted about use of a frequency band (unlicensed band) (for example, 2.4-GHz band or 5-GHz band) different from a licensed band licensed for a communication operator as well as use of a licensed band.

An NR system utilizing an unlicensed band may be referred to as an NR-Unlicensed (U) system, an NR License-Assisted Access (LAA) system, an NR-U system, and so on.

In the unlicensed band, a plurality of systems such as not only the NR-U system but also any other LAA system, a Wi-Fi (registered trademark) system, and the like are assumed to coexist as well as the NR-U system, and thus at least one of interference control and collision control is performed between the plurality of systems.

A transmitting node in the NR-U system performs listening to check presence or absence of transmission from any other node (for example, a base station, a user terminal, a Wi-Fi apparatus, or the like) before transmitting a signal (for example, data signal) in an unlicensed band. Note that the listening may be referred to as Listen Before Talk (LBT), Clear Channel Assessment (CCA), carrier sense, a channel access procedure, or the like.

The transmitting node may be, for example, a base station (for example, gNodeB, (gNB), a transmission/reception point (TRP)), or a network (NW)) in a downlink (DL), and a user terminal (for example, User Equipment (UE)) in an uplink. A receiving node receiving a signal from the transmitting node may be, for example, a UE in the DL and a base station in the UL.

The transmitting node starts transmission a given period after detection of absence of transmission from any other apparatus (idle)(for example, immediately after the detection or a back-off period after the detection) during listening, and transmits no signal when transmission from any other apparatus is detected during listening (busy, LBT-busy).

On the other hand, in a case of detecting the absence of transmission from any other node (idle, LBT-idle) during listening, the transmitting node acquires a transmission opportunity (TxOP) and channel occupancy and starts transmission of a signal. The time of the transmission opportunity is referred to as a channel occupancy time (COT).

The COT is the total length of time required for all transmissions within the transmission opportunity and gaps during a given time, and may be equal to or shorter than a maximum COT (MCOT). The MCOT may be determined based on a channel access priority class. The channel access priority class may be associated with a contention window size.

In NR, studies are conducted about sharing, among one or more nodes, of the TxOP (COT) acquired by a certain node (COT sharing). In the COT sharing, the DL and the UL may be in a one-to-one relationship or may be a one-to-many relationship or a many-to-one relationship.

LBT for acquiring the TxOP is referred to as initial LBT (I-LBT). In a case where the TxOP (COT) acquired by a certain node is shared with another node, LBT (short LBT) may or may not be performed before transmission from the other node. Whether to perform the short LBT may be determined based on the length of a gap period from the end of transmission from the preceding node in the TxOP.

Note that the node may perform, as I-LBT, LBT in LTE LAA or receiver assisted LBT. The LBT in the LTE LAA in this case may be in category 4.

The NR-U system as described above may be operated based on carrier aggregation (CA) or dual connectivity (DC) between a component carrier (CC) of an unlicensed band (unlicensed CC) and a CC of a licensed band (licensed CC) or a standalone (SA) unlicensed CC. Note that the CC may be replaced with a serving cell, a carrier, a cell, and so on.

The unlicensed CC may be interchangeably interpreted as an unlicensed band, an unlicensed spectrum, a secondary cell (SCell), a licensed assisted access (LAA) SCell, an LAA cell, a primary cell (PCell)(also referred to as a Primary Secondary Cell (PSCell), a Special Cell (SpCell), and so on), a frequency to which channel sensing is applied, an NR-U intended frequency, and so on.

The licensed CC may be interpreted as a licensed band, a licensed spectrum, a PCell, a PSCell, a SpCell, an SCell, a non-NR-U intended frequency, Rel. 15, NR, a frequency to which channel sensing is not applied, an NR-U intended frequency, and so on.

### (Slot Format)

For licensed CCs in NR, semi-static or dynamic control of a format for each slot (slot format) is under study. In this regard, the slot format may include at least one of one or more downlink (DL) symbols, one or more uplink (UL) symbols, and one or more flexible symbols. The slot format may be considered to indicate a combination of transmission directions of symbols within each slot.

Specifically, in NR, the UE is assumed to semi-statically or dynamically control at least one of transmission directions (at least one of UL (Uplink), DL (Downlink), and flexible) of a slot and symbols in the slot.

A transmission direction (also referred to as a format, a configuration, and so on) for a given number of consecutive slots or symbols in the consecutive slots is also referred to as a slot configuration, a UL-DL configuration of time division duplex (TDD) (TDD-UL-DL configuration (tdd-UL-DL-configuration)), and so on.

Information related to the TDD-UL-DL configuration (TDD-UL-DL configuration information) may be reported (configured) from the base station to the UE through higher layer signaling. Note that the higher layer signaling may be replaced with a higher layer parameter.

In this regard, the higher layer signaling may be, for example, at least one of the following.
- Radio Resource Control (RRC) signaling
- Medium Access Control (MAC) signaling (for example, MAC control elements (CEs) or MAC Protocol Data Units (PDUs))
- Information transmitted by a broadcast channel (for example, a Physical Broadcast Channel (PBCH) (for example, master information blocks (MIBs)).
- System information (for example, system information blocks (SIBs), minimum system information (Remaining Minimum System Information (RMSI)), and other system information (OSI).

The TDD-UL-DL configuration information may be cell-specific (may be provided commonly to each group including one or more UEs (UE-group common)), or may be UE-specific.

For example, cell-specific TDD-UL-DL configuration information may be, for example, "tdd-UL-DL-Configuration Common" or "tdd-UL-DL-ConfigurationCommon2" of an RRC information element (IE). The cell-specific TDD-UL-DL configuration information may include information indicating at least one of the following.
- Subcarrier spacing used as a reference (µ_{ref})
- Periodicity of a DL pattern and a UL pattern (slot configuration period P)
- The number (dₛₗₒₜ) of slots only for DL symbols (full DL slots)
- The number (d_{symb}) of consecutive DL symbols in slots succeeding the full DL slots
- The number (uₛₗₒₜ) of slots only for UL symbols (full UL slots)
- The number (d_{symb}) of UL symbols succeeding the full UL slots

The UE-specific TDD-UL-DL configuration information may be, for example, "tdd-UL-DL-ConfigDedicated" of an RRC iE. The UE-specific TDD-UL-DL configuration information may include information indicating at least one of the following.
- Set of one or more slot configurations for overwriting at least one allocation for the UL and the DL provided by cell-specific TDD-UL-DL configuration information
- Slot index given by each slot configuration
- Transmission direction for the symbols in the slots given by each slot configuration (for example, all the symbols in the slots are DL symbols, all the symbols in the slots are UL symbols, and the symbols for which the DL or UL is not explicitly specified are flexible symbols).

In a case where the cell-specific TDD-UL-DL configuration information is given, the UE may determine the slot format of each of a given number of slots, based on the cell-specific TDD-UL-DL configuration information.

In a case where, in addition to the cell-specific TDD-UL-DL configuration information, the UE-specific TDD-UL-DL configuration information is given, the UE may override (modify or change), based on the UE-specific TDD-UL-DL configuration information, flexible symbols in the given number of slots specified by the cell-specific TDD-UL-DL configuration information.

The slot format configured based on at least one of the cell-specific TDD-UL-DL configuration information and the UE-specific TDD-UL-DL configuration information thus configured may be referred to as a Semi-static TDD pattern, a semi-static slot format, a semi-static pattern, and so on.

In NR, studies have been conducted about reporting to a UE of identification information (for example, slot format combination index) regarding a combination of one or more slot formats (or one or more SFIs) (slot format combination). Note that the slot format combination index is also referred to as a slot format combination identifier, a slot format indicator (SFI) index, an SFI-index, a given ID, a given index, and so on.

The slot format combination index may be included in DCI (for example, DCI format 2_0) transmitted by a downlink control channel (also referred to as, for example, a Physical Downlink Control Channel (PDCCH), a group common (GC) PDCCH, and so on). Note that the "DCI format" may be used interchangeably with the "DCI."

The DCI including a slot format combination index (for example, DCI format 2_0) may be assigned an additional cyclic redundancy check (CRC) bit scrambled with a given radio network temporary identifier (RNTI) (for example, Slot Format Indication (SFI)-RNTI) or may include the CRC bit (may be CRC scrambled). The SFI-RNTI may be reported from the base station to the UE through higher layer signaling.

The UE may be configured with a set of one or more slot format combinations through higher layer signaling (for example, "slotFormatCombToAddModList" of an RRC IE). Note that the set may be configured for the UE in each cell. Each slot format combination may be associated with a slot format combination index. The slot format combination index in the DCI may specify one of the slot format combinations in the set.

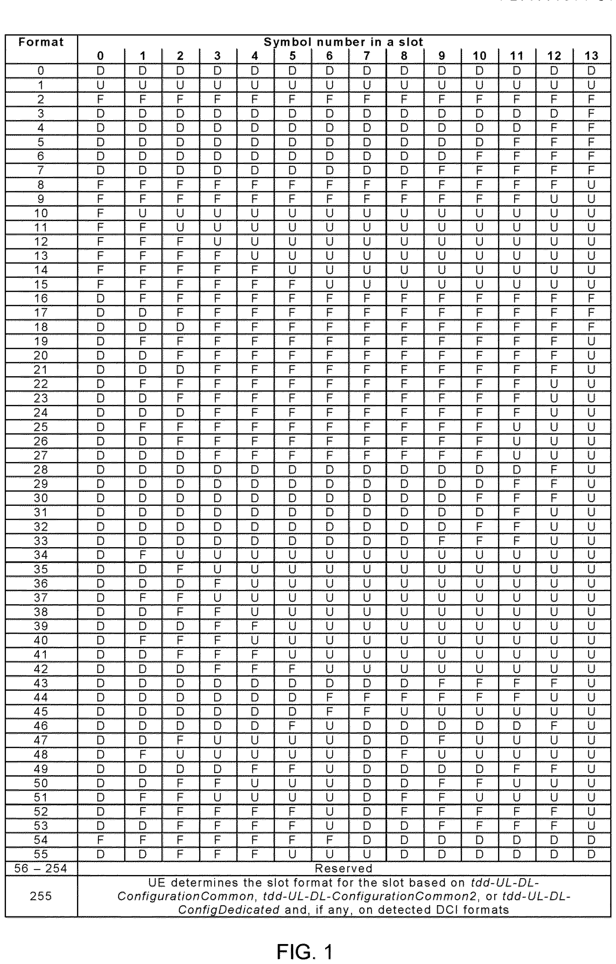

FIG. 1 is a diagram to show an example of slot formats. As shown in FIG. 1, the slot format may indicate a transmission direction for each of the symbols in one slot. In FIG. 1, "D" denotes a DL symbol, "U" denotes a UL symbol, and "F" denotes a symbol for which either DL or UL may be used. For example, FIG. 1 shows 56 types of slot formats #0 to #55 identified by given indexes (also referred to as format indexes, formats, SFIs, and so on) .

The slot format combination indicated by a given field value (for example, an SFI-index field value, an SFI index field value, or a slot format combination index field value) in the DCI (for example, DCI format 2_0) may be a combination of one or more of the slot formats (or one or more SFIs) illustrated in FIG. 1.

The UE may monitor the DCI with given periodicity (also referred to as monitoring periodicity, PDCCH monitoring periodicity, SFI monitoring periodicity, and so on). The monitoring periodicity may be equal to or longer than a period (duration) corresponding to the slot format combination (that is, one or more slots) or shorter than the period.

In a case of detecting the DCI in a given slot, the UE may determine the slot formats of a given number of consecutive slots, based on the given field value in the DCI. Specifically, the UE may determine a slot format combination indicated by the given field value from among the slot format combinations configured by higher layer signaling.

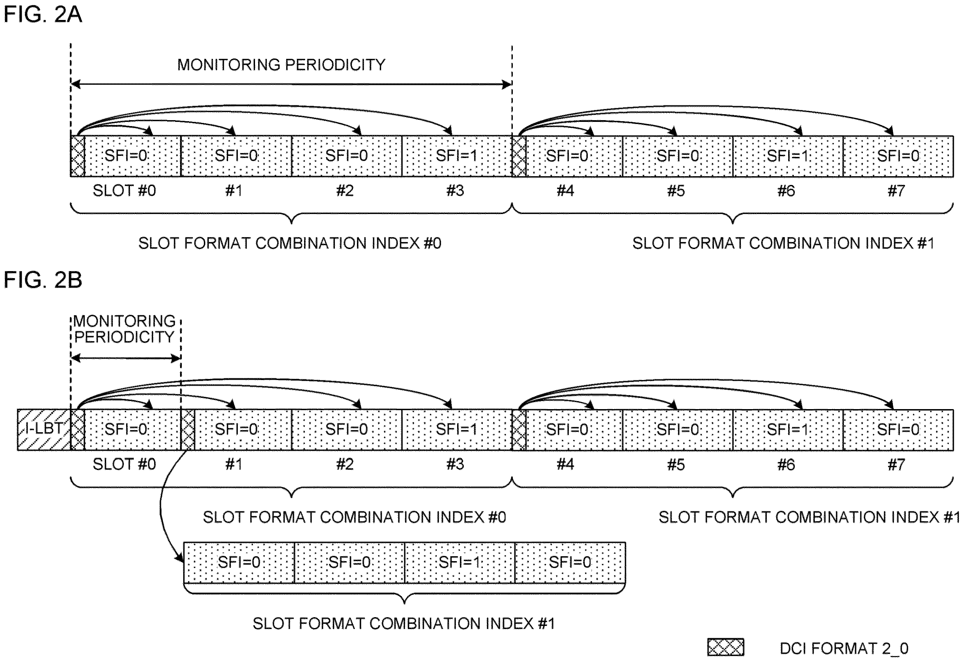

FIGS. 2A and 2B are diagrams showing an example of determination of slot formats. Note that FIGS. 2A and 2B illustrate DCI format 2_0 but that no such limitation is intended. In FIGS. 2A and 2B, as an example, a set including a plurality of slot format combinations is assumed to be configured for the UE. Each slot format combination may be identified by a slot format combination index.

For example, FIG. 2A shows an example in which the monitoring periodicity for DCI is equal to the period corresponding to the slot format combination (in this case, four slots). The given field value for DCI format 2_0 detected in slot #0 in FIG. 2A specifies slot format combination index #0 indicating a combination of slot formats #0, #0, #0, and #1. The UE may respectively determine slot formats #0, #0, #0, and #1 for slots #0, #1, #2, and #3, based on slot format combination index #0.

The given field value for DCI format 2_0 detected in slot #4 in FIG. 2A specifies slot format combination index #1 indicating a combination of slot formats #0, #0, #1, and #0. The UE may respectively determine slot formats #0, #0, #1, and #0 for slots #4, #5, #6, and #7, based on slot format combination index #1.

In contrast, FIG. 2B shows an example in which the monitoring periodicity for the DCI is shorter (in this case, one slot periodicity) than the period corresponding to the slot format combination (in this case, four slots). As shown in FIG. 2B, even in a case where another DCI format 2_0 is detected in slot #1, another DCI format 2_0 is expected to indicate the same slot formats for slots #1 to #3 overlapping with DCI format 2_0 detected in slot #0. This also applies to DCI format 2_0 detected in slot #4.

Thus, in the licensed CC in NR, the slot format of each slot is controlled in units of slot format combinations, based on DCI format 2_0. Even in a case where another DCI format 2_0 is detected within the period corresponding to the slot format combination (for example, slots #0 to #3 in FIG. 2B), the slot formats are not expected to be modified within the period.

Incidentally, in NR-U, studies have been conducted about utilization of the DCI including a slot format combination index (for example, DCI format 2_0) as a signal reporting the start of the COT (start reporting signal).

However, the unlicensed CC in NR may involve coexistence with an unknown system beyond control, and may involve a sudden change in channel environment compared to the licensed CC. Consequently, in the unlicensed CC, as shown in FIG. 2B, in a case where the UE does not expect any modification of the slot format within the period corresponding to the slot format combination, an appropriate slot format(s) fails to be utilized, leading to a possible reduction in throughput. Flexible control of slot formats is also desired for the licensed CC.

Thus, the inventors of the present invention studied a method for appropriately controlling modification of the slot format based on DCI newly detected within a period corresponding to a slot format combination detected based on a slot format combination index in DCI, and arrived at the present invention (first aspect). With this, a slot format(s) can be flexibly changed according to a sudden change in environment in an unlicensed CC. A slot format(s) can also be flexibly changed in a licensed CC.

The inventors of the present invention came up with the idea that, in a case where the slot format of each slot in a COT is determined based on the DCI including the slot format combination index, an end timing for the COT can be more simply reported based on the length of the period corresponding to the slot format combination indicated by the slot format combination index (second aspect).

Embodiments according to the present disclosure will be described in detail with reference to the drawings as follows. The aspects of the present embodiment may each be employed independently or may be employed in combination.

### (First Aspect)

In a first aspect, modification of the slot format will be described. Note that, in the first aspect, modification of a slot format(s) during a COT in an unlicensed CC will be described but that no such limitation is intended. The first aspect can be applied to modification of a slot format(s) in a licensed CC.

The base station transmits a signal indicating the start of a COT (COT start signal). The COT start signal may be, for example, the DCI transmitted from the PDCCH (also referred to as group common DCI, a UE group common PDCCH, and so on) common to a group of one or more UEs (UE group). The DCI may include information (also referred to as a slot format combination index, slot format combination ID, and the like) indicating slot format(s) of one or more slots (slot format combination). The DCI may be, for example, DCI format 2_0.

Upon detection of the COT start signal, the UE may monitor the DCI including a slot format combination index (for example, DCI format 2_0) on monitoring occasions with given monitoring periodicity. The given monitoring periodicity may be configured for the UE by using a higher layer parameter (for example, "monitoringSlotPeriodicityAndOffset" of an RRC IE).

The given monitoring periodicity may be shorter than the period corresponding to one or more slot formats specified by the slot format combination index in the DCI (that is, the period corresponding to the slot format combination).

In a case of detecting another DCI including a slot format combination index (information indicating a second combination of one or more slot formats) on any of the monitoring occasions with periodicity shorter than the period corresponding to the slot format combination, the UE may control, based on the slot format combination index, modification of the slot formats determined based on the last slot format combination index (information indicating a first combination of one or more slot formats).

Specifically, in a case of detecting, within the period, another DCI including a slot format combination index, the UE may expect that the slot format combination index in the other DCI indicates, for the same slots, slot formats different from the slot formats indicated by the slot format combination index in the last DCI. Specifically, the slot combination index in the other DCI is not subject to the constraint of indicating, for the same slots, the same slot formats as those indicated by the slot format combination index in the last DCI, and can indicate different slot formats.

For example, when modification of the slot formats is enabled or activated (this is also referred to as a first mode, an SFI reporting mode, or the like), in a case where another DCI including a slot format combination index is detected within the given period, the UE may modify the slot formats of the respective slots in accordance with the slot format combination index in the other DCI.

In contrast, when modification of the slot formats is disabled or de-activated (this is also referred to as a second mode, an SFI non-reporting mode, or the like), even in a case where another DCI including a slot format combination index is detected within the given period, the UE may discard the other DCI or assume that the same slot formats are indicated for the same slots.

Whether to enable or disable (activate or de-activate) modification of the slot formats may be explicitly indicated by the UE or may be implicitly derived by the UE.

For example, in a case of receiving a given higher layer parameter (for example, a given RRC IE or a given MAC CE), the UE may enable or activate modification of the slot formats. Alternatively, in a given cell (for example, LAA SCell), the UE may enable or activate modification of the slot formats.

Whether to enable (activate) the slot formats as described above may be determined for each cell (serving cell, carrier, or component carrier) or for each partial band in the cell (for example, a band used as a unit for LBT (LBT subband)).

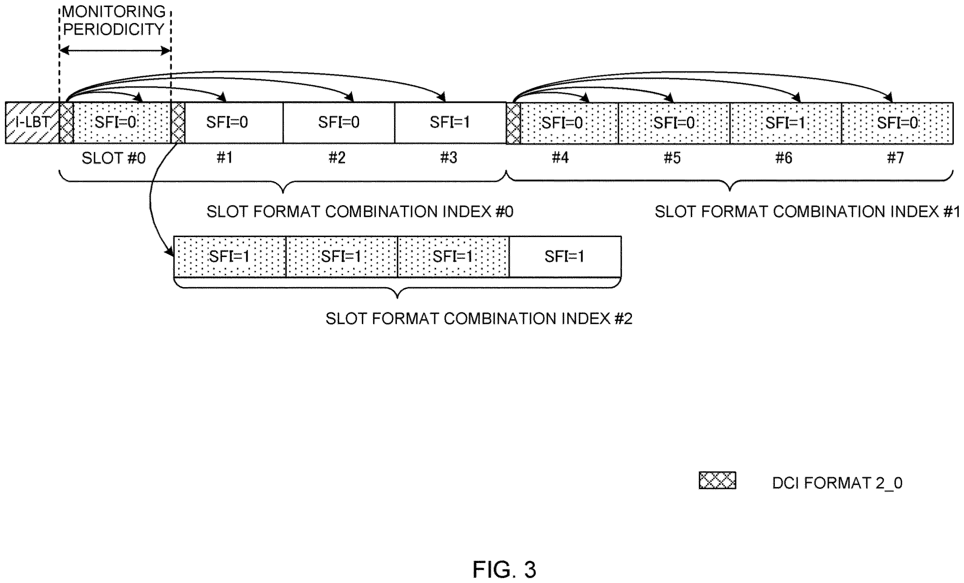

FIG. 3 is a diagram to show an example of determination of slot formats according to the first aspect. In FIG. 3, the base station is assumed to acquire TxOP (COT) by I-LBT.

As shown in FIG. 3, the monitoring periodicity with which the UE monitors DCI including a slot format combination index (for example, DCI format 2_0) may be shorter than the given period. In FIG. 3, the monitoring periodicity is assumed to be one slot. However, no such limitation is intended.

In FIG. 3, the UE may receive a set (list) of one or more slot format combinations (for example, "slotFormatCombinations" in "SlotFormatCombinationsPerCell" of the RRC IE). The set may be received for each cell. Information (for example, the "SlotFormatCombination" of RRC IE) indicating the association between each slot format combination and a corresponding slot format combination index may be received.

For example, in FIG. 3, it is assumed that three types of sets of slot format combinations identified by slot format combination indexes #0, #1, and #2 are at least configured for the UE. Note that the number of slot format combinations (or slot format combination indexes) configured for the UE is not limited to the illustrated number.

Note that, in FIG. 3, modification of the slot format is assumed to be enabled or activated but that enabling or disabling of the modification need not be controlled.

As shown in FIG. 3, the UE may detect, in slot #0, a COT start signal including slot format combination index #0 (for example, DCI format 2_0) and respectively determine slot formats #0, #0, #0, and #1 for slots #0, #1, #2, and #3, based on slot format combination index #0.

In FIG. 3, the UE may detect another DCI including slot format combination index #2 (for example, DCI format 2_0), within the period (in FIG. 3, slot #1) corresponding to slot formats #0, #0, #0, and #1 (slot format combination). The UE may respectively determine slot formats #1, #1, #1, and #1 for slots #1, #2, #3, and #4, based on slot format combination index #2 in the other DCI.

As shown in FIG. 3, for slots #1 and #2, slot format #0 is specified by slot format combination index #0 detected in slot #0, whereas slot format #1 is specified by slot format combination index #2 detected in slot #1. Specifically, the UE may expect that slot format combination index #2 detected last indicates, for the same slots #1 and #2, slot formats different from the slot formats indicated by slot format combination index #0 detected earlier.

In a case of detecting a plurality of slot format combination indexes indicating different slot formats for the same slots, the UE may modify the slot formats of the same slots, based on the last slot format combination index.

For example, in FIG. 3, slot format combination index #0 detected in slot #0 indicates a combination of slot formats of slots #0 to #3, and slot format combination index #2 detected in slot #1 indicates a combination of slot formats of slots #1 to #4. In this case, the UE may modify slot formats #0, #0, and #1 of the overlapping slots #1 to #3 to slot formats #1, #1, and #1 based on slot format combination index #1 detected last.

Note that, for slot #3 in FIG. 3, both slot format combination indexes #0 and #2 indicate the same slot format #1. In this case, the UE may omit modification of the slot format of slot #3.

Slot format combination index #2 detected in slot #1 indicates slot format #1 of slot #4. However, the UE may modify slot format #1 of slot #4 to slot format #0, based on slot format combination index #1 detected in slot #4.

As described above, in the first aspect, in a case where another DCI is detected within a period corresponding to one or more slot formats (slot format combination) specified by a slot format combination index, the UE modifies the slot formats within the period, based on the slot format combination index in the other DCI. Thus, the slot formats can be flexibly changed according to a sudden change in environment or the like.

### (Second Aspect)

In a second aspect, reporting of an end timing of a COT will be described. Note that the second aspect may be used independently or in combination with the first aspect. Note that, in the second aspect, differences between the second aspect and the first aspect will be mainly described.

The UE receives DCI (for example, DCI format 2_0) including information (also referred to as, for example, a slot format combination index, SFI index, slot format combination ID, and so on) indicating a combination of one or more slot formats (slot format combination). The UE may determine the end timing for the COT, based on the slot format combination index.

Specifically, the UE may determine the end timing for the COT, based on the period (that is, one or more slots) corresponding to the slot format combination indicated by the slot format combination index in the DCI.

The slot format combination index in the DCI may indicate, regardless of the number of slots from the given monitoring occasion to the COT end timing, the slot format combination corresponding to the number of slots (first COT end report).

Alternatively, the slot format combination index in the DCI may indicate the slot format combination corresponding to the number of slots from the given monitoring occasion to the COT end timing in a case where the number of slots is equal to or smaller than a given threshold (second COT end report).

### <First COT End Report>

In the first COT end report, the UE may assume that on whichever monitoring occasion the DCI is detected, the COT ends at the end of the period (for example, one or more slots) corresponding to the slot format combination specified by the slot format combination index in the DCI. Note that "assume" may be replaced with "determine," "expect," or the like.

Specifically, DCI detected as a COT start signal may indicate a slot format combination corresponding to the number of slots from the start timing to the end timing for the COT. The DCI detected on each of the monitoring occasions within the COT may indicate the slot format combination corresponding to the number of slots from the slot including the monitoring occasion to the COT end timing.

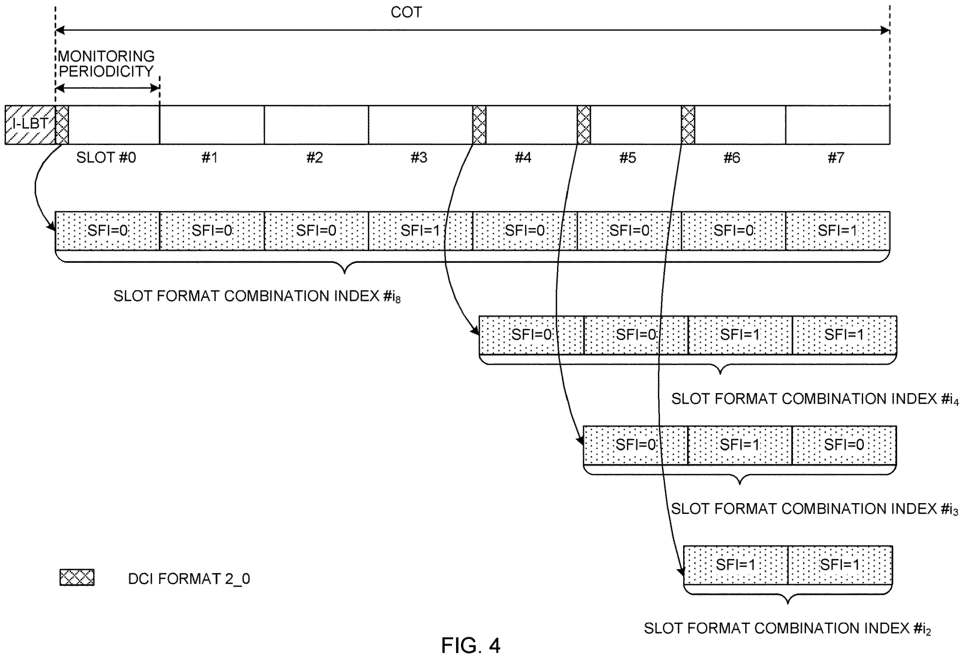

FIG. 4 is a diagram to show an example of the first COT end report according to the second aspect. In FIG. 4, the base station is assumed to acquire a TxOP (COT) of eight slots by I-LBT. However, the number of slots constituting the COT is not limited to the illustrated number. Note that, in FIG. 4, the monitoring periodicity for DCI including a slot format combination index (for example, DCI formats) is assumed to be one slot but that no such limitation is intended and that the monitoring periodicity may be two slots or more.

In FIG. 4, the UE may receive a set (list) including at least a plurality of slot format combinations with different lengths (corresponding periods) (the set includes, for example, "slotFormatCombinations" in "SlotFormatCombinationsPerCell" of the RRC IE). The set may include a plurality of slot format combinations with the same length. Information (for example, the "SlotFormatCombination" of RRC IE) indicating the association between each slot format combination and a corresponding slot format combination index may be received.

For example, in FIG. 4, the COT is eight slots, and the monitoring periodicity for the DCI is one slot. Thus, the list may include one or more slot format combinations of eight slots, one or more slot format combinations of seven slots, ... a slot format combination of two slots, and one or more slot format combinations of one slot.

Thus, the UE may receive one or more slot format combinations for each period (for example, in FIG. 4, each of the periods from one to eight slots) that may be specified based on a length L of the COT and monitoring periodicity C for the DCI. For example, each slot format combination constituted of L-n*C (integer of n≥0) slots may be identified by slot format combination index #i_{L-n*C} (integer of i ≥ 0).

As shown in FIG. 4, the UE may detect, in slot #0, a COT start signal (for example, DCI format 2_0) including slot format combination index #i₈, and determine, based on slot format combination index #i₈, a slot format combination (for example, in FIG. 4, slot formats #0, #0, #0, #1, #0, #0, #0, and #1) for eight slots #0 to #7 corresponding to slot #0 to the COT end.

The UE may detect, in slot #4, DCI including slot format combination index #i₄, and determine, based on slot format combination index #i₄, a slot format combination (for example, in FIG. 4, slot formats #0, #0, #1, and #1) for four slots #4 to #7 corresponding to slot #4 to the COT end.

The UE may detect, in slot #5, DCI including slot format combination index #i₃, and determine, based on slot format combination index #i₃, a slot format combination (for example, in FIG. 4, slot formats #0, #1, and #0) for three slots #5 to #7 corresponding to slot #5 to the COT end.

The UE may detect, in slot #6, DCI including slot format combination index #i₂, and determine, based on slot format combination index #i₂, a slot format combination (for example, in FIG. 4, slot formats #1 and #1) for two slots #6 and #7 corresponding to slot #6 to the COT end.

Note that, in FIG. 4, an earlier detected slot format combination index and a later detected slot format combination index are assumed to indicate different slot formats for the same slots (see the first aspect). For example, slot format #0 of slot #6 is determined based on slot format combination index #i₈, but the UE may modify slot #6 to slot format #1, based on slot format combination index #i₄ detected later.

However, in the first COT end report, it may also be assumed that the earlier detected slot format combination index and the later detected slot format combination index indicate the same slot formats for the same slots. In this case, the UE need not perform modification of the slot formats, based on the later detected slot format combination index.

As described above, in the first COT end report, on whichever monitoring occasion the DCI is detected, the DCI indicates the slot format of each of the slots from the slot in which the DCI is detected to the COT end. Thus, the UE can detect the end timing for the COT by single detection of DCI.

### <Second COT End Report>

In the second COT end report, DCI detected on a monitoring occasion when the number of slots until the COT end timing is equal to or larger than a given threshold (or the number of slots is larger than the given threshold) may include a slot format combination index indicating a slot format combination with a given length (given period) X.

In contrast, DCI detected on a monitoring occasion when the number of slots until the COT end timing is smaller than the number of slots during the given period X may include a slot format combination index indicating a combination of the slot formats of the number of slots until the COT end timing.

The given period X may be reported to the UE through higher layer signaling or may be predefined in specifications.

In a case where the period corresponding to the slot format combination indicated by the slot format combination index in the DCI is shorter than the given period X, the UE may assume that the COT ends at the end of the short period.

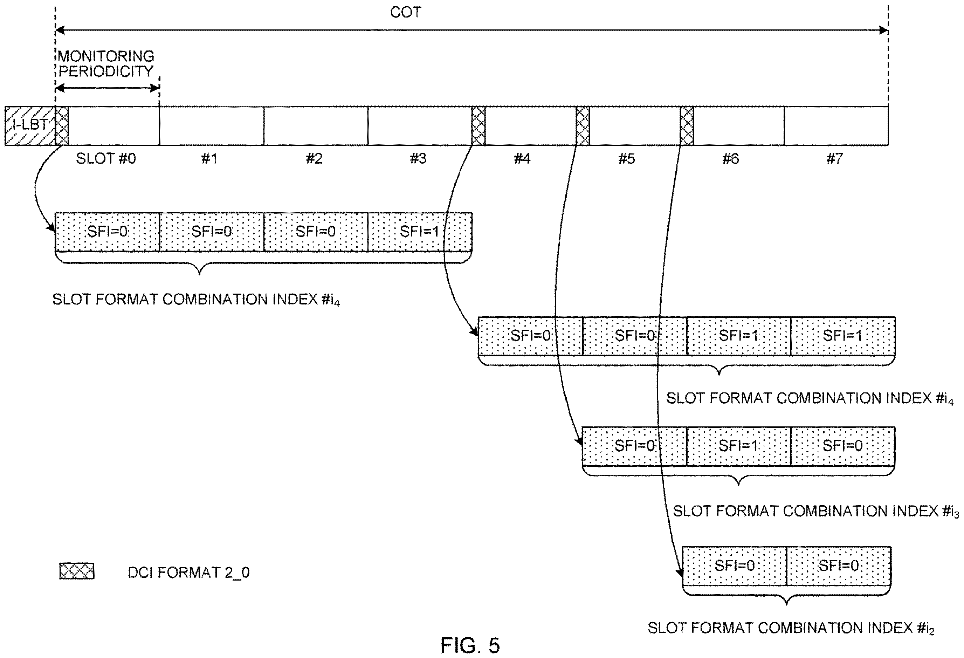

FIG. 5 is a diagram to show an example of the second COT end report according to the second aspect. FIG. 5 differs from FIG. 4 in that DCI detected on a monitoring occasion when the number of slots until the COT end timing is larger than the number of slots during the given period X (in this case, four slots) indicates a slot format combination index indicating a slot format combination for the given period X instead of a slot format combination until the COT end timing. The difference from FIG. 4 will be mainly described below.

In FIG. 5, the UE may receive a set (list) including at least a plurality of slot format combinations with different lengths equal to or shorter than the given period X (the set includes, for example, "slotFormatCombinations" in "SlotFormatCombinationsPerCell" of the RRC IE).

For example, in FIG. 5, the given period X is four slots, and the monitoring periodicity for the DCI is one slot. Thus, the list may include one or more slot format combinations of four slots, one or more slot format combinations of three slots, a slot format combination of two slots, and one or more slot format combinations of one slot.

Thus, the UE may receive one or more slot format combinations for each period (for example, in FIG. 5, each of the periods from one to four slots) that may be specified based on the given period X and monitoring periodicity C for the DCI For example, each slot format combination constituted of X-n*C (integer of n≥0) slots may be identified by slot format combination index #i_{X-n*C} (integer of i ≥ 0).

As shown in FIG. 5, the UE may detect, in slot #0, a COT start signal (for example, DCI format 2_0) including slot format combination index #i₄, and determine, based on slot format combination index #i₄, a slot format combination (for example, in FIG. 5, slot formats #0, #0, #0, and #1) for the given period X from slot #0 (four slots #0 to #3).

The UE may detect, in slot #4, the DCI including slot format combination index #i₄, and determine, based on slot format combination index #i₄, a slot format combination (for example, in FIG. 5, slot formats #0, #0, #0, and #1) for the given period X from slot #4 (four slots #4 to #7).

In this case, for slot #5, the number of slots until the COT end timing is smaller than the number of slots during the given period X (in this case, four slots). Thus, the UE may detect, in slot #5, DCI including slot format combination index #i₃, and determine, based on slot format combination index #i₃, a slot format combination (for example, in FIG. 5, slot formats #0, #1, and #0) for three slots #5 to #7 corresponding to slot #5 to the COT end.

The UE may detect, in slot #6, DCI including slot format combination index #i₂, and determine, based on slot format combination index #i₂, a slot format combination (for example, in FIG. 5, slot formats #0 and #0) for two slots #6 and #7 corresponding to slot #6 to the COT end.

As described above, in a case where the period corresponding to the slot format combination (the number of slots) is shorter than the given period X, the UE may assume that the COT ends at the end of the period corresponding to the slot format combination.

Note that, in FIG. 5, the earlier detected slot format combination index and the later detected slot format combination index are assumed to indicate different slot formats for the same slots (see the first aspect). For example, slot format #1 of slot #7 is determined based on slot format combination index #i₄, but the UE may modify slot #7 to slot format #0, based on slot format combination index #i₃ detected later.

However, in the second COT end report, it may also be assumed that the earlier detected slot format combination index and the later detected slot format combination index indicate the same slot formats for the same slots. In this case, the UE need not perform modification of the slot formats, based on the later detected slot format combination index.

As described above, in the second COT end report, DCI detected on a monitoring occasion when the number of slots until COT end timing is equal to or larger (or is larger) than the number of slots during the given period X specifies a slot format combination index for the fixed length X. Thus, the second COT end report enables a reduction in the number of slot format combinations to be reported in advance compared to the first COT end report.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

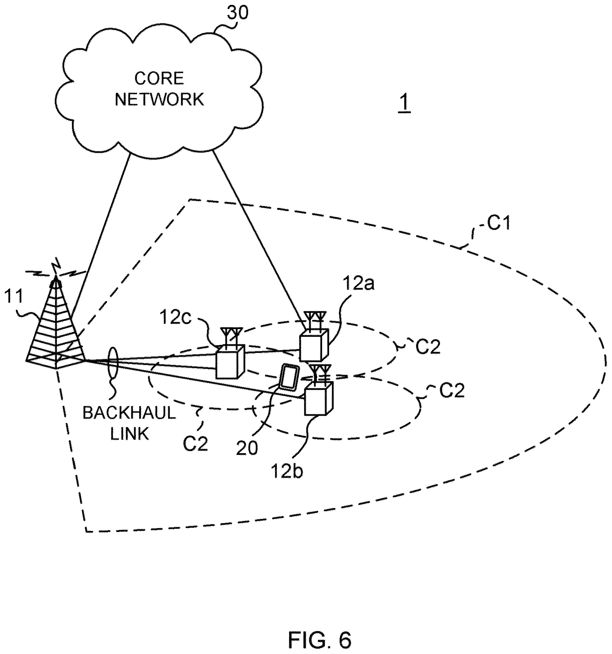

FIG. 6 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6GHz or less (sub-6GHz), and FR2 may be a frequency band which is higher than 24GHz (above-24GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are transmitted on the PDSCH. User data, higher layer control information and so on may be transmitted on the PUSCH. The Master Information Blocks (MIBs) may be transmitted on the PBCH.

Lower layer control information may be transmitted on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be transmitted.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be transmitted. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be transmitted as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be transmitted as an uplink reference signal (UL-RS). Note that DMRS may be referred to as a "user terminal specific reference signal (UE-specific Reference Signal)."

### (Base Station)

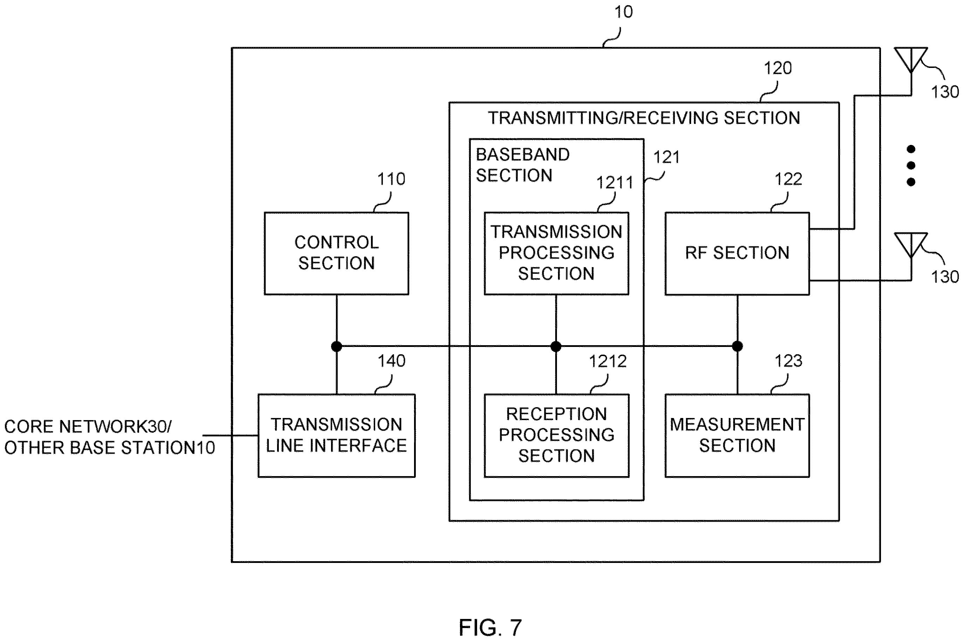

FIG. 7 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmission beam and a reception beam by using digital beam forming (for example, precoding), analog beam forming (for example, phase rotation), and so on.

The transmitting/receiving section 120 (transmission processing section 1211) may performs the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

Note that the transmitting/receiving section 120 may transmit downlink control information including information indicating a combination of one or more slot formats (for example, a slot format combination index). The transmitting/receiving section 220 may transmit downlink control information including information indicating a first combination of one or more slot formats (for example, a slot format combination index). The transmitting/receiving section 220 may transmit downlink control information including information indicating a second combination of one or more slot formats (for example, a slot format combination index).

The control section 110 may control listening to control transmission of downlink control information reporting the start of the channel occupancy time (COT). The control section may control transmission of downlink control information indicating the end of the COT.

The control section 110 may generate downlink control information including information indicating one or more slot formats corresponding to the period until the end of the COT, and control transmission on each of the monitoring occasions within the COT (first COT end report, for example, FIG. 4).

In a case where the period until the end of the COT is shorter than the given period, the control section 210 may generate downlink control information including information indicating one or more slot formats corresponding to the period until the end of the COT, and control transmission on each of the monitoring occasions within the COT (second COT end report, for example, FIG. 5).

In a case where the period until the end of the COT is equal to or longer than the given period, the control section 210 may generate downlink control information including information indicating one or more slot formats corresponding to the given period, and control transmission on each of the monitoring occasions within the COT (second COT end report, for example, FIG. 5) .

### (User Terminal)

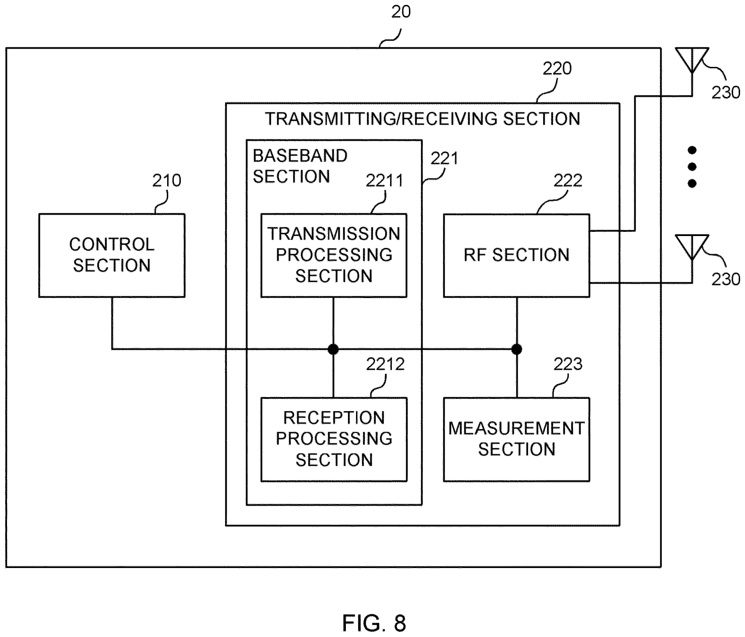

FIG. 8 is a diagram to show an example of a structure of the user terminal according to one embodiment. The user terminal 20 includes a control section 210, a transmitting/receiving section 220, and transmitting/receiving antennas 230. Note that user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be constituted as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmission beam and a reception beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (the RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (the RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (the measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220, the transmitting/receiving antennas 230, and the transmission line interface 240.

Note that the transmitting/receiving section 220 may receive downlink control information including information indicating a combination of one or more slot formats (for example, a slot format combination index). The transmitting/receiving section 220 may receive downlink control information including information indicating a first combination of one or more slot formats (for example, a slot format combination index).

In a case where another downlink control information including a second combination of one or more slot formats is detected on any of the monitoring occasions with periodicity shorter than the period corresponding to the one or more slot formats, the control section 210 may control modification of the slot format determined based on the information indicating the first combination (first aspect, for example, FIG. 3).

The control section 210 may assume that the information indicating the second combination indicates, for the same slots, slot formats different from the slot formats determined based on the information indicating the first combination, based on the information indicating the second combination (second aspect, for example, FIG. 3).

The downlink control information may be used to report the start of the channel occupancy time (COT).

The control section 210 may assume that the channel occupancy time (COT) ends at the end of the period corresponding to the one or more slot formats determined based on the information indicating the first or second combination.

The control section 210 may modify the slot formats, based on the information indicating the second combination in a case where modification of the slot formats is enabled, and may discard the other downlink control information in a case where modification of the slot formats is disabled.

The control section 210 may assume that the channel occupancy time (COT) ends at the end of the period corresponding to the one or more slot formats determined based on the downlink control information (second aspect).

On whichever monitoring occasion the downlink control information is detected, the control section 210 may assume that the COT ends at the end of the period corresponding to the one or more slot formats (first COT end report, for example, FIG. 4).

In a case where the period corresponding to the one or more slot formats is shorter than the given period, the control section 210 may assume that the COT ends at the end of the period (second COT end report, for example, FIG. 5).

In a case where, within the period corresponding to the one or more slot formats, another downlink control information including a combination of one or more slot formats is detected, the control section 210 may assume that the other downlink control information indicates slot formats different from the slot formats in the above-described downlink control information (combination of the first and second aspects).

In a case where, within the period corresponding to the one or more slot formats, another downlink control information including a combination of one or more slot formats is detected, the control section 210 may assume that the other downlink control information indicates, for the same slots, the same slot formats as those in the above-described downlink control information.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

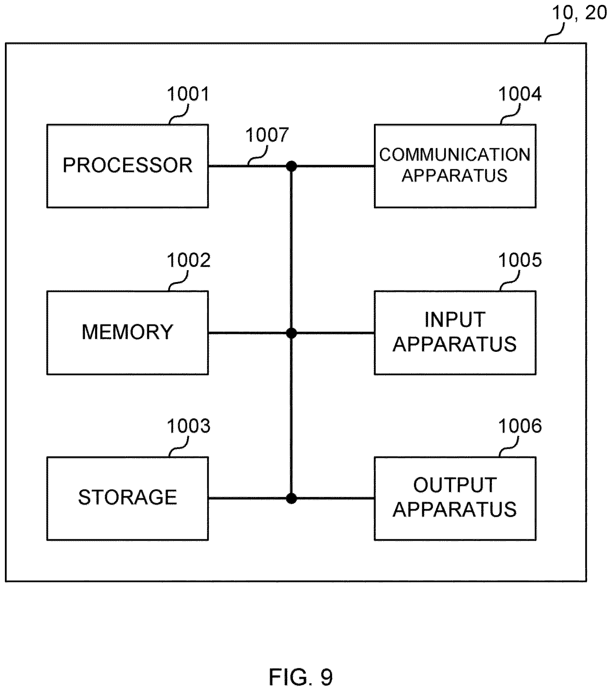

For example, a base station, a user terminal, and so on according to one embodiment of the present disclosure may function as a computer that executes the processes of the radio communication method of the present disclosure. FIG. 9 is a diagram to show an example of a hardware structure of the base station and the user terminal according to one embodiment. Physically, the above-described base station 10 and user terminal 20 may each be formed as computer an apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmission power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP."

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be indicated by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, modified, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure ca be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmission power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure is defined by the recitations of claims. Consequently, the description of the present disclosure is provided only for the purpose of explaining examples, and should by no means be construed to limit the invention according to the present disclosure in any way.

## Claims

1. A terminal (20) comprising:
a receiving section (220) configured to receive a first downlink control information, DCI, including information indicating a combination of one or more slot formats and a second DCI including information indicating a combination of one or more slot formats; and
a control section (210) configured to determine an end of channel occupancy time, COT, at an end of a duration corresponding to the one or more slot formats,
wherein if the second DCI is detected during the duration, the first DCI and the second DCI indicate a same slot format for a same slot.

2. The terminal (20) according to claim 1,
wherein the terminal (20) is configured to monitor DCI for a monitoring periodicity for a downlink control channel configured by higher layer signaling, and
wherein if the monitoring periodicity is smaller than a duration of a slot format combination indicated by the first DCI, and if the second DCI is detected during the duration, the first DCI and the second DCI indicate a same slot format for a same slot.

3. A radio communication method for a terminal (20) comprising:
receiving first downlink control information, DCI, including information indicating a combination of one or more slot formats and a second DCI including information indicating a combination of one or more slot formats, and
determining an end of channel occupancy time at an end of a duration corresponding to the one or more slot formats,
wherein if the second DCI is detected during the duration, the first DCI and the second DCI indicate a same slot format for a same slot.

4. A system (1) comprising a terminal (20) according to claim 1 or 2 and a base station (10, 12), wherein
the base station comprises a transmitting section (120) configured to transmits the first DCI and the second DCI to the terminal (20).

## Patentansprüche

1. Endgerät (20), umfassend:
einen Empfangsabschnitt (220), der so konfiguriert ist, dass er eine erste Downlink-Steuerinformation, DCI, einschließlich Informationen, die eine Kombination von einem oder mehreren Schlitzformaten angeben, und eine zweite DCI einschließlich Informationen, die eine Kombination von einem oder mehreren Schlitzformaten angeben, empfängt; und
einen Steuerabschnitt (210), der so konfiguriert ist, dass er ein Ende einer Kanalbelegungszeit, COT, an einem Ende einer Dauer bestimmt, die dem einen oder den mehreren Schlitzformaten entspricht,
wobei, wenn die zweite DCI während der Dauer detektiert wird, die erste DCI und die zweite DCI ein gleiches Schlitzformat für einen gleichen Schlitz angeben.

2. Endgerät (20) nach Anspruch 1,
wobei das Endgerät (20) so konfiguriert ist, dass es DCI für eine Überwachungsperiodizität für einen Downlink-Steuerkanal überwacht, der durch Signalisierung auf höherer Schicht konfiguriert ist, und
wobei, wenn die Überwachungsperiodizität kleiner als eine Dauer einer Schlitzformatkombination ist, die durch die erste DCI angegeben wird, und wenn die zweite DCI während der Dauer detektiert wird, die erste DCI und die zweite DCI ein gleiches Schlitzformat für einen gleichen Schlitz angeben.

3. Funkkommunikationsverfahren für ein Endgerät (20), umfassend:
Empfangen erster Downlink-Steuerinformationen, DCI, einschließlich Informationen, die eine Kombination von einem oder mehreren Schlitzformaten angeben, und eine zweite DCI einschließlich Informationen, die eine Kombination von einem oder mehreren Schlitzformaten angeben, und
Bestimmen eines Endes einer Kanalbelegungszeit an einem Ende einer Dauer, die dem einen oder den mehreren Schlitzformaten entspricht,
wobei, wenn die zweite DCI während der Dauer detektiert wird, die erste DCI und die zweite DCI ein gleiches Schlitzformat für einen gleichen Schlitz angeben.

4. System (1), das ein Endgerät (20) nach Anspruch 1 oder 2 und eine Basisstation (10, 12) umfasst, wobei
die Basisstation einen Sendeabschnitt (120) umfasst, der so konfiguriert ist, dass er die erste DCI und die zweite DCI an das Endgerät (20) sendet.

## Revendications

1. Terminal (20) comprenant :
une section (220) de réception configurée pour recevoir des premières informations de commande de liaison descendante, DCI, incluant des informations indiquant une combinaison d'un ou plusieurs formats de fente et des deuxièmes DCI incluant des informations indiquant une combinaison d'un ou plusieurs formats de fente ; et
une section (210) de commande configurée pour déterminer une fin d'intervalle d'occupation de canal, COT, à une fin d'une durée correspondant aux un ou plusieurs formats de fente,
dans lequel les deuxièmes DCI sont détectées pendant la durée, les premières DCI et les deuxièmes DCI indiquent un même format de fente pour une même fente.

2. Terminal (20) selon la revendication 1,
dans lequel le terminal (20) est configuré pour surveiller des DCI pour une périodicité de surveillance pour un canal de commande de liaison descendante configuré par une signalisation de couche supérieure, et
dans lequel si la périodicité de surveillance est plus petite qu'une durée d'une combinaison de format de fente indiquée par les premières DCI, et si les deuxièmes DCI sont détectées pendant la durée, les premières DCI et les deuxièmes DCI indiquent un même format de fente pour une même fente.

3. Procédé de communication radio pour un terminal (20) comprenant :
la réception de premières informations de commande de liaison descendante, DCI, incluant des informations indiquant une combinaison d'un ou plusieurs formats de fente et des deuxièmes DCI incluant des informations indiquant une combinaison d'un ou plusieurs formats de fente, et
la détermination d'une fin d'un intervalle d'occupation de canal à une fin d'une durée correspondant aux un ou plusieurs formats de fente,
dans lequel les deuxièmes DCI sont détectées pendant la durée, les premières DCI et les deuxièmes DCI indiquent un même format de fente pour une même fente.

4. Système (1) comprenant un terminal (20) selon la revendication 1 ou la revendication 2 et une station de base (10, 12), dans lequel
la station de base comprend une section (120) de transmission configurée pour transmettre les premières DCI et les deuxièmes DCI au terminal (20).
